# EUROPÄISCHE PATENTSCHRIFT

(11) **EP 2 803 512 B1**
(45) Veröffentlichungstag und Bekanntmachung des Hinweises auf die Patenterteilung: **30.12.2015**
(21) Anmeldenummer: 14166970.5
(22) Anmeldetag: 05.05.2014
(51) Int. Cl.: B60G 7/00, F16C 11/06

(54) **Kugelgelenk und Kraftfahrzeug-Lenker**
Ball joint and motor vehicle steering device
Articulation à bille et bielle de véhicule automobile

(30) Priorität: 17.05.2013 DE 102013105091
(43) Veröffentlichungstag der Anmeldung: 19.11.2014
(73) Patentinhaber: Benteler Automobiltechnik GmbH, 33102 Paderborn (DE)
(72) Erfinder: Meyer, Stephan, 33605 Bielefeld (DE); Will, Andreas, 37688 Beverungen (DE)
(74) Vertreter: Griepenstroh, Jörg

(56) Entgegenhaltungen:
- EP-A1- 0 481 212
- DE-A1- 19 523 674
- DE-A1-102004 040 403
- DE-A1-102006 008 252
- DE-A1-102013 108 080
- DE-B4-102008 043 694
- DE-U1- 20 311 595
- FR-A1- 2 691 490
- JP-A- H06 156 032

## Beschreibung

Die Erfindung betrifft ein Kugelgelenk sowie einen Kraftfahrzeug-Lenker, wie Querlenker oder Längslenker, mit einem solchen Kugelgelenk.

Kraftfahrzeug-Lenker, wie Querlenker oder Längslenker, sind Teil der Radaufhängung eines Kraftfahrzeugs und dienen zur Führung und Lenkung der Räder und zur Abstützung von Längs- und/oder Querkräften. Die kinematische Kopplung der Lenker erfolgt über Lager bzw. Lageranordnungen. Hierbei kommen Kugelgelenke zum Einsatz, welche die Verbindung der Lenker mit anderen Bauteilen bzw. der Karosserie mit mehreren Drehfreiheitsgraden ermöglichen.

Ein Kugelgelenk in der üblichen Ausgestaltung umfasst einen Grundkörper bzw. ein Gelenkgehäuse mit einer darin ausgebildeten Kugelpfanne sowie einen Kugelzapfen mit einer Gelenkkugel. Die Gelenkkugel des Kugelzapfens ist in der Kugelpfanne aufgenommen und durch einen Schließring gehalten. Grundkörper und Schließring sind an dem zueinander gewandten Kontaktbereich durch eine Schweißnaht miteinander verbunden.

Der Schließring schließt das Kugelgelenk nach der Montage des Kugelzapfens und übernimmt die Zug- bzw. Druckkräfte, die unter Last am Kugelzapfen wirken. Um den hohen Belastungen standhalten zu können, muss der Schließring umlaufend vollständig mit dem Grundkörper verschweißt sein. Der Ausbildung der Schweißnaht kommt wegen der hohen Beanspruchung der Verbindung besondere Bedeutung zu. Bauteiltoleranzen sowie die Bewegung beim Schweißvorgang können dazu führen, dass die Fügestelle bzw. -linie zwischen dem Schließring und dem Grundkörper beim umlaufenden Verschweißen über 360° bzw. darüber hinaus bis zu 365° von der Soll-Schweißstelle abweichen. Dies kann die Verbindung zwischen dem Schließring und dem Grundkörper nachteilig beeinflussen. Die hohe Belastbarkeit insbesondere die Auspresskraft des Kugelzapfens über den ganzen Umfang des Schließrings ist dann nicht sicher gewährleistet. Nacharbeiten sind notwendig, wodurch der Herstellungsaufwand erhöht wird.

Die DE 10 2008 043 694 B4 offenbart ein Kugelgelenk insbesondere für Fahrwerksbaugruppen und Lenkungsbaugruppen von Kraftfahrzeugen bestehend aus einem Gehäuse mit einem Gehäuseoberteil (Schließring) und einem Gehäuseunterteil (Kugelpfanne) und einem im Gehäuse mittels einer Lagerschale gelagerten Gelenkzapfen. Das Gehäuseunterteil und das Gehäuseoberteil sind an dem zueinander gewandten Kontaktbereich durch eine Schweißnaht miteinander verbunden. Hierbei ist die Schweißnaht in einem Winkel von 20° bis 60° zur Mittellängsachse des Kugelgelenks geneigt. Die Schweißnaht wird durch ein Laserschweißverfahren ausgebildet. Die nach dem Schweißfügevorgang die Schweißnaht bildenden Schweißfügeflächen sind an den zu verbindenden Gehäusebauteilen vor dem Schweißfügevorgang in einem Winkel von 20° bis 60° zur Mittellängsachse des Kugelgelenks geneigt.

Durch die DE 10 2006 024 198 A1 zählt ein Verfahren zur Herstellung eines Kugelgelenks sowie ein Kugelgelenk zum Stand der Technik. Das Kugelgelenk umfasst ein Gehäuse, einen Gelenkzapfen, eine Lagerschale und einen Deckel, der die Lagerschale im Gehäuse verspannt. Der Deckel bildet einen Schließring und ist mit mindestens einem Abstandshalter versehen. Der Abstandshalter hält den Deckel vor dem Verschweißen in einem Abstand vom Gehäuse. Beim Verschweißen schmilzt der Abstandshalter ab, so dass der Deckel unter Vorspannung am Gehäuse gefügt ist.

Der Erfindung liegt, ausgehend vom Stand der Technik die Aufgabe zugrunde, ein Kugelgelenk mit einer fertigungstechnisch und qualitativ verbesserten Verbindung zwischen dem Grundkörper und dem Schließring zu schaffen sowie einen für den betrieblichen Einsatz verbesserten Kraftfahrzeug-Lenker mit einem Kugelgelenk aufzuzeigen.

Die Lösung dieser Aufgabe besteht nach der Erfindung in einem Kugelgelenk gemäß den Merkmalen von Patentanspruch 1.

Vorteilhafte Ausgestaltungen des erfindungsgemäßen Kugelgelenks sind Gegenstand der abhängigen Ansprüche 2 bis 8.

Das Kugelgelenk weist einen Grundkörper und eine im Grundkörper ausgebildete Kugelpfanne auf. Der Grundkörper ist aus einer Blechplatine geformt, wobei die Blechplatine aus einem Stahlwerkstoff besteht, insbesondere aus einem hochfesten Stahl, vorzugsweise einem hochfesten Mehrphasenstahl mit einer Zugfestigkeit von 800 MPa und einer Streckgrenze von 680 MPa und höher. Das Kugelgelenk umfasst ferner einen Kugelzapfen mit einer Gelenkkugel und einem Zapfenkörper. Die Gelenkkugel des Kugelzapfens wird vorzugsweise unter Eingliederung einer Lagerschale in der Kugelpfanne aufgenommen. Die Lageorientierung bzw. Fixierung der Gelenkkugel in der Kugelpfanne erfolgt durch einen Schließring. Der Schließring besitzt eine Durchführungsöffnung, durch welche der Zapfenkörper des Kugelzapfens geführt ist. Der am Grundkörper fixierte Schließring bildet den oberen Gehäuseabschluss des Kugelgelenks. Der Schließring besitzt einen Flanschabschnitt, der am Grundkörper des Kugelgelenks öffnungsseitig der Kugelpfanne anliegt. Durch eine um den Flanschabschnitt umlaufende Schweißnaht wird der Schließring mit dem Grundkörper verschweißt. Die Fügung des Schließrings am Grundkörper erfolgt schweißtechnisch durch Laserschweißen oder Elektronenstrahl-schweißen.

Erfindungsgemäß weist der Flanschabschnitt an seinem Außenumfang eine umlaufende Nut auf, wobei eine Nutflanke als Schweißfläche ausgebildet ist. Die Nut kann als konkav eingeformte Fläche am Außenumfang des Flanschabschnitts ausgeführt sein. Beim Schweißvorgang wird der Schweißstrahl auf die Schweißfläche gerichtet. Die Freimachung außen am Schließring durch die Nut ermöglicht eine zielgenaue Ausrichtung des Schweißstrahls auf die Schweißfläche. Die Schweißfläche verbreitert die Einflusszone des Schweißstrahls. Hierdurch können Bauteiltoleranzen oder nachteilige Beeinflussungen durch die Bewegung des Schweißstrahls kompensiert werden. Solange der Schweißstrahl auf die Schweißfläche trifft, wird eine feste Verbindung sichergestellt. Im Kontaktbereich zwischen dem Schließring und dem Grundkörper unterhalb der Schweißfläche entsteht eine umlaufende Schweißnaht, die sich in der Ebene der Kontaktfläche erstreckt.

Das erfindungsgemäße Kugelgelenk ist fertigungstechnisch vorteilhaft und hochbelastbar. Die erfindungsgemäße Ausgestaltung verbessert die Qualität des Kugelgelenks, und zwar sowohl hinsichtlich der Festigkeit bzw. Belastbarkeit des Kugelgelenks als auch in dessen Lebensdauer. Die Fertigung des Kugelgelenks, insbesondere die Verbindung zwischen Grundkörper und Schließring, ist rationell und mit verringerter Produktionszeit möglich. Insbesondere kann mit einem größeren bzw. breiteren Toleranzfeld gearbeitet werden, da die Erfindung die Herstellung einer qualitativ hochwertigen Fügeverbindung zwischen Grundkörper und Schließring ermöglicht auch bei schwankenden Bauteiltoleranzen.

Die Schweißfläche begrenzt einen nasen- oder keilförmigen Schweißbereich. Hierbei ist die Nut so konfiguriert, dass der Schweißstrahl satt unter einem vorgegebenen Winkel auf die Schweißfläche trifft. Vorzugsweise weist die Nut eine untere Nutflanke auf. Diese bildet die Schweißfläche. Ferner weist die Nut eine obere Nutflanke auf. Die obere Nutflanke nimmt gegenüber einer Vertikalen einen Winkel ein, der größer oder gleich 10° ist. Insbesondere nimmt die obere Nutflanke gegenüber der Vertikalen einen Winkel ein, der größer oder gleich 20° bemessen ist.

Die Konfiguration der Nut ist so gestaltet, dass der Schweißstrahl relativ steil geführt werden kann. Insbesondere kann der Schweißstrahl in einem Winkel von kleiner 20° zur Vertikalen bzw. zur Mittellängsachse des Kugelgelenks geneigt sein.

Durch die erfindungsgemäße Ausgestaltung des Schließrings mit der Schweißfläche an seinem Außenumfang wird auch die Verbindungsfläche im Kontaktbereich zwischen Grundkörper und Unterseite des Schließrings bzw. Flanschabschnitts verbreitert bzw. vergrößert. Eine breite Schweißzone erhöht die Zug- und Druckbelastbarkeit der Verbindung, wodurch eine höhere Auspresskraft des Kugelzapfens erreicht wird.

Der Grundkörper ist vorzugsweise als Pressteil aus einer Stahlblechplatine geformt. Die Kugelpfanne ist einstückiger Bestandteil des Grundkörpers. Öffnungsseitig der Kugelpfanne ist bevorzugt eine Schließringaufnahme ausgebildet. Die Ausbildung der Schließringaufnahme erfolgt bei der Formgebung des Grundkörpers in einem Umformvorgang, beispielsweise einem Tiefziehvorgang bzw. einem Pressvorgang.

Der Schließring weist einen Stutzenabschnitt und den Flanschabschnitt auf. Der Stutzenabschnitt besitzt einen Außendurchmesser und der Flanschabschnitt besitzt einen Außendurchmesser. Der Außendurchmesser des Flanschabschnitts ist größer als der des Stutzenabschnitts. Mit der unterhalb des Flanschabschnitts befindlichen Ringfläche liegt der Flanschabschnitt am Grundkörper an.

Eine für die Praxis vorteilhafte Ausgestaltung sieht vor, dass die Gelenkkugel des Kugelzapfens unter Eingliederung einer Lagerschale in die Kugelpfanne aufgenommen ist. Die Lagerschale besteht insbesondere aus einem thermoplastischen Kunststoff, vorzugsweise aus Polyoxymethylen (POM). Möglich ist auch, dass die Lagerschale aus Polyetheretherketon (PEEK) besteht.

Zur Fixierung des Kugelzapfens in der Kugelpfanne wird der Schließring mit einem Stutzenabschnitt in die Schließringaufnahme eingesetzt. Der Stutzenabschnitt greift in die Schließringaufnahme ein und drückt hierbei einen oberen umlaufenden Wandabschnitt der Lagerschale gegen die Gelenkkugel. Hierzu weist der Stutzenabschnitt auf seiner inneren Umfangsfläche eine an die Geometrie der Gelenkkugel angepasste Form auf. Mit der Ringfläche an der Unterseite des Flanschabschnitts gelangt der Schließring am Grundkörper zur Anlage. Die Fügung erfolgt dann mittels des wie vorstehend beschriebenen Schweißvorgangs durch einen von außen auf die Schweißfläche einwirkenden Schweißstrahl. Die Schweißfläche, auf die der Schweißstrahl gerichtet wird und einwirkt, sowie die sich ausbildende Verbindungsfläche sind so groß, dass Bauteiltoleranzen oder auch Ungenauigkeiten bei der Bewegung des Schweißstrahls zuverlässig ausgeglichen werden, ohne dass die Qualität der Schweißfügung abnimmt.

Zum Schutz des Kugelgelenks ist ein Dichtungsbalg vorgesehen. Üblicherweise besteht der Dichtungsbalg aus einem gummielastischen Material, insbesondere aus einem Elastomer wie beispielsweise einem CR-Elastomer (Chloroprene Rubber-Elastomer). Der Dichtungsbalg ist mittels eines ersten Spannelements an einer oberhalb der Nut am Flanschabschnitt ausgebildeten Spannfläche außenseitig am Flanschabschnitt fixiert. Die Spannfläche oberhalb der Nut ist ausreichend groß bemessen, dass der Dichtungsbalg mit Hilfe des Spannelements hier zuverlässig gespannt werden kann. Des Weiteren ist der Dichtungsbalg mittels eines zweiten Spannelements am Zapfenkörper des Kugelzapfens fixiert. Als Spannelement kommen insbesondere Spannringe aus Federstahldraht zum Einsatz.

Die Erfindung ermöglicht die rationale Herstellung von leichtbauenden Kraftfahrzeug-Lenkern (Anspruch 9), insbesondere Querlenkern oder Längslenkern. Die Kugelpfanne ist einstückiger Bestandteil des Grundkörpers des Lenkers und ist bei der Formgebung des Grundkörpers aus der Blechplatine ausgeformt. Die Kugelpfanne bildet eine einteilige Gehäuseaufnahme im Grundkörper, in welcher die Gelenkkugel des Zapfenkörpers aufgenommen wird. Durch den mit dem Grundkörper umlaufend stabil gefügten Schließring wird der Zapfenkörper in der Kugelpfanne dreh- bzw. gleitdrehbeweglich gehalten. Die erfindungsgemäße Ausgestaltung schafft eine hochbelastbare Fügung zwischen Schließring und Grundkörper. Die Verbindung trägt zuverlässig betrieblich auftretende Zug-, Druck- und Schubbelastung.

Umlaufend um die Öffnung der Kugelpfanne ist vorteilhafterweise im Grundkörper eine Fügefläche geformt, an welcher der Flanschabschnitt des Schließrings mit der Ringfläche an seiner Unterseite anliegt. Die Fügefläche ist bei der Formgebung des Grundkörpers ausgeformt und die Fügefläche kann gegenüber der Ebene des benachbarten Bodenbereichs des Grundkörpers in Richtung zum Schließring vorstehen. Hierdurch kann der Fügevorgang zwischen Schließring und Grundkörper weiter verbessert werden.

Die Biege- und Torsionssteifigkeit eines Kraftfahrzeug-Lenkers mit einem erfindungsgemäßen Kugelgelenk wird weiter verbessert, wenn der Grundkörper schalenförmig konfiguriert ist und einen Boden mit randseitigen Schenkeln aufweist. Weiterhin kann der Boden steifigkeitserhöhende Einprägungen besitzen, ebenso wie Durchzüge mit umlaufend geschlossenen oder unterbrochenen Kragen. Solche Durchzüge dienen neben der Steifigkeitserhöhung auch zur Gewichtseinsparung.

Weitere Vorteile und vorteilhafte Ausgestaltungen des erfindungsgemäßen Kugelgelenks und eines Kraftfahrzeug-Lenkers ergeben sich aus den Patentansprüchen und dem nachfolgend anhand der Zeichnungen beschriebenen Ausführungsbeispiel. Es zeigen:
- Figur 1: in perspektivischer Darstellungsweise einen Querlenker mit integriertem Kugelgelenk;
- Figur 2: einen Vertikalschnitt durch den Querlenker im Bereich des Kugelgelenks mit der Darstellung einer ersten Montagesituation des Kugelgelenks;
- Figur 3: den Vertikalschnitt entsprechend der Darstellung von Figur 2 mit der Darstellung einer zweiten Montagesituation des Kugelgelenkes;
- Figur 4a: den Ausschnitt A der Figur 3 in vergrößerter Darstellungsweise,
- Figur 4b: einen Ausschnitt aus dem Schließring des Kugelgelenks in nochmals vergrößerter Darstellung und
- Figur 5: den Vertikalschnitt durch das Kugelgelenk nach der Endmontage.

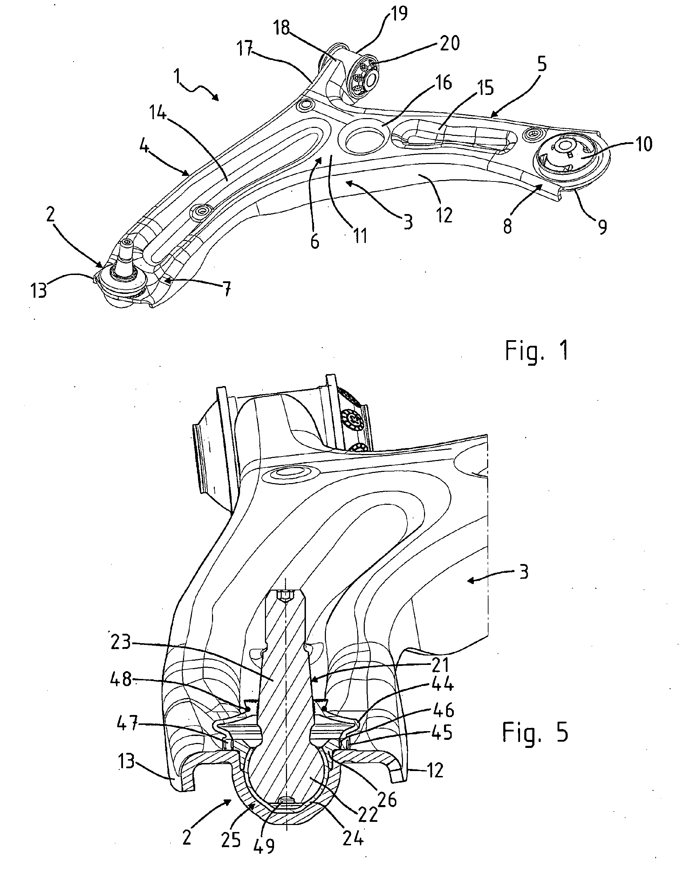

Die Figur 1 zeigt einen Kraftfahrzeug-Lenker in Form eines Querlenkers 1 mit integriertem Kugelgelenk 2 in perspektivischer Darstellung.

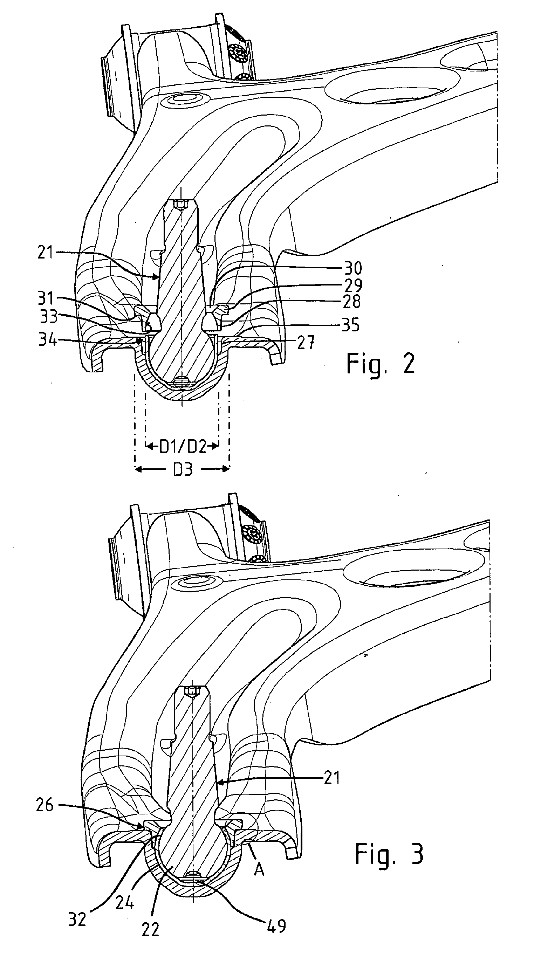

Die Figuren 2 bis 5 zeigen jeweils einen Querschnitt durch den Querlenker 1 im Bereich des Kugelgelenks 2, wobei jeweils verschiedene Montagesituationen des Kugelgelenks dargestellt sind.

Der Querlenker 1 kommt innerhalb der Radführung bzw. der Radaufhängung eines Kraftfahrzeugs zur Anwendung.

Der Querlenker 1 weist einen schalenförmig konfigurierten Grundkörper 3 aus Stahl auf. Der Grundkörper 3 besitzt zwei Längenabschnitte 4, 5, die in einem Winkel zueinander quer ausgerichtet sind. Über einen Verbindungsabschnitt 6 gehen die Längenabschnitte 4, 5 ineinander über. Der Grundkörper 3 ist aus einer Stahlblechplatine pressformtechnisch hergestellt. Am freien Ende 7 des ersten Längenabschnitts 4 ist in dessen Endbereich das Kugelgelenk 2 angeordnet. Am freien Ende 8 des zweiten Längenabschnitts 5 ist in dessen Endbereich eine Lageraufnahme in Form eines Durchzugs 9 mit einem Gummi-Metall-Lager 10 vorgesehen.

Der Grundkörper 3 weist einen Boden 11 mit randseitigen Schenkeln 12, 13 auf. Die Schenkel 12, 13 sind zum Boden 11 rechtwinklig ausgerichtet. Im Boden 11 des Grundkörpers 3 ist in den Längenabschnitten 4 bzw. 5 jeweils eine Einprägung 14, 15 eingeformt. Die Einprägung 14, 15 ist in Richtung der randseitigen Schenkel 12, 13 ausgestellt. Weiterhin weist der Boden 11 im Verbindungsabschnitt 6 zwischen den Einprägungen 14, 15 einen in Richtung der Einprägungen 14, 15 dargestellten Durchzug 16 auf. Am äußeren Umfang des Verbindungsabschnitts 6 ist ein Fortsatz 17 vorgesehen, der an seinem freien Ende eine Lageranbindung 18 bildet. Hier ist eine Hülse 19 für ein Gummi-Metall-Lager 20 gefügt.

Das Kugelgelenk 2 umfasst einen Kugelzapfen 21 mit einer Gelenkkugel 22 und einem Zapfenkörper 23. Die Gelenkkugel 22 des Kugelzapfens 21 ist unter Eingliederung einer Lagerschale 24 in einer Kugelpfanne 25 aufgenommen und durch einen Schließring 26 lageorientiert. Bei dem Schließring 26 handelt es sich um ein Drehteil. Die Lagerschale 24 besteht aus thermoplastischem Kunststoff.

Die Kugelpfanne 25 ist einstückiger Bestandteil des Grundkörpers 3 und aus der Blechplatine bei der pressformtechnischen Herstellung des Grundkörpers 3 geformt. Öffnungsseitig der Kugelpfanne ist eine Schließringaufnahme 27 ausgebildet. Der Schließring 26 weist einen Stutzenabschnitt 28 und einen Flanschabschnitt 29 auf. Weiterhin besitzt der Schließring 26 eine zentrale Öffnung 30 für die Durchführung des Zapfenkörpers 23. Der Stutzenabschnitt 28 des Schließrings 26 besitzt einen Außendurchmesser D1. Dieser entspricht dem Innendurchmesser D2 der Schließringaufnahme 27. Der Flanschabschnitt 29 des Schließrings 26 besitzt einen Außendurchmesser D3. Der Außendurchmesser D3 des Flanschabschnitts 29 ist größer bemessen als der Außendurchmesser D1 des Stutzenabschnitts 28. Grundkörperseitig an der Unterseite des Flanschabschnitts 29 ist eine Ringfläche 31 ausgebildet.

Bei der Montage des Kugelgelenks 2 wird die innen befettete Lagerschale 24 in die Kugelpfanne 25 eingesetzt. Anschließend wird der Kugelzapfen 21 mit seiner Gelenkkugel 22 in der Lagerschale 24 positioniert. Darauf wird der Schließring 26 mit seiner Öffnung 30 über den Zapfenkörper 23 geführt und mit dem Stutzenabschnitt 28 in die Schließringaufnahme 27 eingesetzt bzw. gepresst. Hierbei wird der obere umlaufende Wandabschnitt 32 der Lagerschale 24 durch die Innenkontur des Schließrings 26 gegen die Gelenkkugel 22 gedrückt, so dass sich die Lagerschale 24 der Kugelform der Gelenkkugel 22 anpasst. Der Schließring 26 hat hierzu an seinem Innenumfang eine kugelabschnittsförmig gestaltete Innenwand 33, deren Kontur der Gelenkkugel 22 konform gestaltet ist.

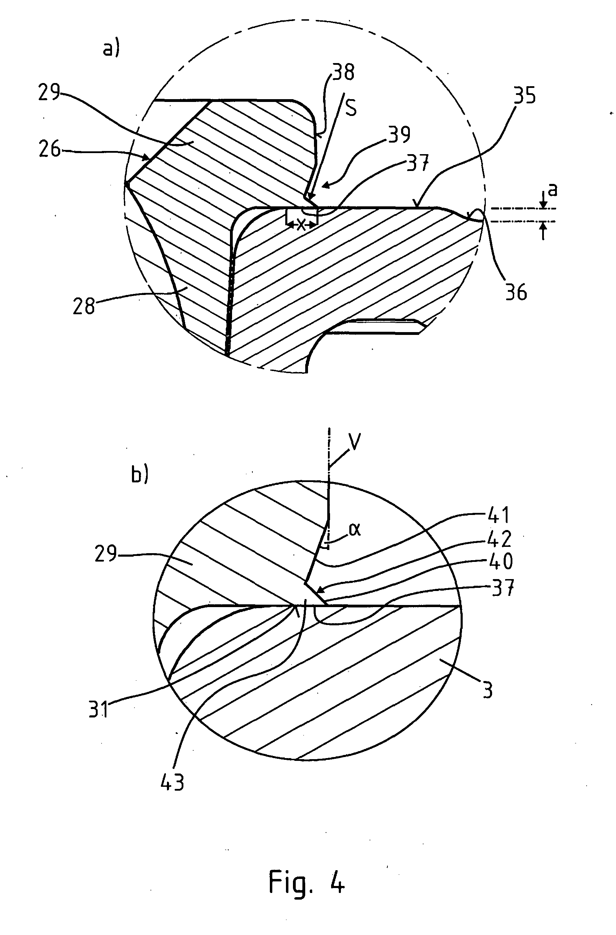

Die Figur 2 zeigt den in der Lagerschale 24 angeordneten Kugelzapfen 21 vor der Montage des Schließrings 26. Die Figur 3 zeigt die Situation mit eingepresstem Schließring 26. Der in der Schließringaufnahme 27 positionierte Schließring 26 liegt mit seiner Ringfläche 31 an einer umlaufend um die Öffnung 34 der Kugelpfanne 25 geformten Fügefläche 35 an. Die Fügefläche 35 ist bei der Formgebung des Grundkörpers 3 ausgeformt und steht gegenüber der Ebene des benachbarten Bodenbereichs 36 des Grundkörpers 3 in Richtung zur Ringfläche 31 um ein Maß a geringfügig vor (s. Figur 4). Die Fügefläche 35 ist durch eine Materialverschiebung beim Pressvorgang des Grundkörpers 3 erzeugt.

Der Schließring 26 ist mit dem Grundkörper 3 mittels Laserstrahl-Schweißen oder Elektronenstrahl-Schweißen verschweißt. Hierbei sind der Schließring 26 und der Grundkörper 3 durch eine entlang der Ringfläche 31 an der Unterseite des Flanschabschnitts 29 und der Fügefläche 35 des Grundkörpers 3 umlaufende Schweißnaht 37 verbunden.

Der Flanschabschnitt 29 weist an seinem Außenumfang 38 eine umlaufende Nut 39 auf (siehe Figuren 4a und 4b). Die Nut 39 besitzt eine untere Nutflanke 40 und eine obere Nutflanke 41. Die untere Nutflanke 40 ist als Schweißfläche 42 ausgebildet. Auf die Schweißfläche 42 wird der Schweißstrahl S beim Fügevorgang gerichtet. Hierzu ist die Nut 39 so konfiguriert, dass der Schweißstrahl S zuverlässig auf die Schweißfläche 42 trifft auch bei Montage- bzw. Positionsungenauigkeiten in Folge von Bauteiltoleranzen von Schließring 26 und/oder Grundkörper 3. Auch Ungleichmäßigkeiten bei der Schweißbewegung wirken sich nicht nachteilig aus, da die Schweißfläche 42 ausreichend groß bemessen ist als Zielzone für den Schweißstrahl S. Unterhalb der Schweißfläche 42 ist einen nasenförmiger bzw. keilförmiger Schweißbereich 43 vorgesehen, der oben durch die Schweißfläche 42 begrenzt ist. Die Unterseite des Schweißbereichs 43 wird durch die Ringfläche 31 gebildet. Solange der Schweißstrahl S auf die Schweißfläche 42 trifft, wird eine feste und qualitativ hochwertige Schweißnaht 37 hergestellt. Die Fügeverbindung bildet sich im Kontaktbereich zwischen dem Schließring 26 und dem Grundkörper 3 an Ringfläche 31 und Fügefläche 35 als eine umlaufende Schweißnaht 37 aus, die sich in der Ebene der Kontaktfläche erstreckt. Durch die Schweißfläche 42, die in einem Winkel zur Ebene der Kontaktfläche verläuft, wird die Füge- bzw. Verbindungsfläche vergrößert. Die Breite der Verbindungsfläche ist in der Figur 4 mit x gekennzeichnet. Die Breite x der Verbindungsfläche ist gegenüber einer herkömmlichen Fügung vergrößert. Diese größere Materialabdeckung an der Verbindungsstelle führt dazu, dass die Festigkeit der Verbindung gesteigert wird. Vorteilhaft wird dementsprechend auch die Auspresskraft gegen den Kugelzapfen erhöht.

Der Schweißstrahl S kann steil, bezogen auf die Vertikale V, geführt werden. Hierbei sind Schweißwinkel zwischen 0° und 20° möglich. Die Geometrie der Nut 39 ist so gestaltet, dass der Schweißstrahl S die Schweißfläche 42 trifft. Die Nut 39 kann konkav eingeformt sein. Die obere Nutflanke 41 nimmt gegenüber der Vertikalen V einen Winkel α ein, der größer oder gleich 10°, insbesondere größer oder gleich 20° bemessen ist. Hierdurch kann die Freimachung am Außenumfang 38 des Flanschabschnitts 29 durch die Nut 39 auf die Schweißstrahlposition und die Schweißbewegung abgestimmt werden. Die obere Nutflanke 41 und die untere Nutflanke 40 treffen im Nuttiefsten in einem stumpfen Winkel aufeinander.

Zum Schutz des Kugelgelenks 2 bzw. der in der Kugelpfanne 25 drehbeweglich gehaltenen Gelenkkugel 22 vor Umwelteinflüssen etc. ist ein Dichtungsbalg 44 vorgesehen. Der Dichtungsbalg 44 ist mittels eines ersten Spannelements 45 an einer Spannfläche 46 oberhalb der Nut 39 am Außenumfang 38 des Flanschabschnitts 29 am Schließring 26 fixiert. Das erste Spannelement 45 ist in einen unteren Ringbund 47 des Dichtungsbalgs 44 integriert, beispielsweise einvulkanisiert. Des Weiteren ist der Dichtungsbalg 44 mittels eines zweiten Spannelements 48 in Form eines Federstahlrings am Zapfenkörper 23 festgelegt. Bei der Montage wird der Dichtungsbalg 44 zunächst mittels des oberen zweiten Spannelements 48 am Zapfenkörper 23 befestigt. Anschließend wird das untere, gelenkpfannenseitige Ende des Dichtungsbalgs 44 mittels des unteren, ersten Spannelements 45 außenseitig am Schließring 26 fixiert. Zum Fixieren kann das Spannelement 45 vorteilhaft mit der Nut 39 zusammenwirken.

In den Figuren 2, 3 und 5 erkennt man ferner, dass die Gelenkkugel 22 des Kugelzapfens 21 eine Ausnehmung 49 an ihrer Unterseite aufweist. Die Ausnehmung 49 kann als Schmierstoffreservoir dienen.

### Bezugszeichen:

- 1 -: Querlenker
- 2 -: Kugelgelenk
- 3 -: Grundkörper
- 4 -: Längenabschnitt
- 5 -: Längenabschnitt
- 6 -: Verbindungsabschnitt
- 7 -: Ende v. 4
- 8 -: Ende v. 5
- 9 -: Durchzug
- 10 -: Gummi-Metall-Lager
- 11 -: Boden
- 12 -: Schenkel
- 13 -: Schenkel
- 14 -: Einprägung
- 15 -: Einprägung
- 16 -: Durchzug
- 17 -: Fortsatz
- 18 -: Lageranbindung
- 19 -: Hülse
- 20 -: Gummi-Metall-Lager
- 21 -: Kugelzapfen
- 22 -: Gelenkkugel
- 23 -: Zapfenkörper
- 24 -: Lagerschale
- 25 -: Kugelpfanne
- 26 -: Schließring
- 27 -: Schließringaufnahme
- 28 -: Stutzenabschnitt
- 29 -: Flanschabschnitt
- 30 -: Öffnung
- 31 -: Ringfläche
- 32 -: Wandabschnitt v. 24
- 33 -: Innenwand
- 34 -: Öffnung v. 25
- 35 -: Fügefläche
- 36 -: Bodenbereich
- 37 -: Schweißnaht
- 38 -: Außenumfang v. 29
- 39 -: Nut
- 40 -: untere Nutflanke
- 41 -: obere Nutflanke
- 42 -: Schweißfläche
- 43 -: Schweißbereich
- 44 -: Dichtungsbalg
- 45 -: Spannelement
- 46 -: Spannfläche
- 47 -: Ringbund v. 44
- 48 -: Spannelement
- 49 -: Ausnehmung

- a -: Maß
- α -: Winkel
- D1 -: Außendurchmesser v. 28
- D2 -: Innendurchmesser v. 27
- D3 -: Außendurchmesser v. 29
- S -: Schweißstrahl
- x -: Breite
- V -: Vertikale

## Patentansprüche

1. Kugelgelenk, insbesondere für Bauteile der Radaufhängung von Kraftfahrzeugen, wie Querlenker oder Längenlänger, aufweisend einen Grundkörper (3) und eine im Grundkörper (3) ausgebildete Kugelpfanne (25) sowie einen Kugelzapfen (21) mit einer Gelenkkugel (22), wobei die Gelenkkugel (22) des Kugelzapfens (21) in der Kugelpfanne (25) aufgenommen und durch einen Schließring (26) gehalten ist, wobei der Schließring (26) einen am Grundkörper (3) anliegenden Flanschabschnitt (29) aufweist und mit dem Grundkörper (3) durch eine um den Flanschabschnitt (29) laufende Schweißnaht (37) verbunden ist, **dadurch gekennzeichnet, dass** der Flanschabschnitt (29) an seinem Außenumfang (38) eine umlaufende Nut (39) aufweist und eine Nutflanke (40) als Schweißfläche (42) ausgebildet ist.

2. Kugelgelenk nach Anspruch 1, **dadurch gekennzeichnet, dass** die Schweißfläche (42) einen nasen- oder keilförmigen Schweißbereich (43) begrenzt.

3. Kugelgelenk nach Anspruch 1 oder 2, **dadurch gekennzeichnet, dass** die Nut (39) so konfiguriert ist, dass ein Schweißstrahl (S) auf die Schweißfläche (42) trifft.

4. Kugelgelenk nach einem der Ansprüche 1 bis 3, **dadurch gekennzeichnet, dass** die Nut (39) eine untere Nutflanke (40) und eine obere Nutflanke (41) aufweist, wobei die obere Nutflanke (41) gegenüber der Vertikalen (V) einen Winkel (α) einnimmt, welcher größer oder gleich (≥) 10°, insbesondere größer oder gleich (≥) 20°, bemessen ist.

5. Kugelgelenk nach einem der Ansprüche 1 bis 4, **dadurch gekennzeichnet, dass** der Flanschabschnitt (29) oberhalb der Nut (39) eine umlaufende Spannfläche (46) aufweist.

6. Kugelgelenk nach einem der Ansprüche 1 bis 5, **dadurch gekennzeichnet, dass** der Grundkörper (3) aus einer Blechplatine gebildet ist und die Kugelpfanne (25) einstückig aus der Blechplatine geformt ist, wobei öffnungsseitig der Kugelpfanne (25) eine Schließringaufnahme (27) ausgebildet ist und der Schließring (26) einen Stutzenabschnitt (28) sowie den Flanschabschnitt (29) aufweist, wobei der Flanschabschnitt (29) einen Außendurchmesser (D3) besitzt, der größer ist als der Außendurchmesser (D1) des Stutzenabschnitts (28).

7. Kugelgelenk nach einem der Ansprüche 1 bis 6, **dadurch gekennzeichnet, dass** die Gelenkkugel (22) des Kugelzapfens (21) unter Eingliederung einer Lagerschale (24) in der Kugelpfanne (25) aufgenommen ist.

8. Kugelgelenk nach einem der Ansprüche 1 bis 7, **dadurch gekennzeichnet, dass** ein Dichtungsbalg (44) vorgesehen ist, welcher mittels eines ersten Spannelements (45) außenseitig am Flanschabschnitt (29) und mittels eines zweiten Spannelements (48) am Zapfenkörper (23) des Kugelzapfens (21) fixiert ist.

9. Kraftfahrzeug-Lenker, insbesondere Querlenker oder Längslenker, mit einem Kugelgelenk (2) nach einem der Ansprüche 1 bis 8.

10. Kraftfahrzeug-Lenker nach Anspruch 9, **dadurch gekennzeichnet, dass** der Grundkörper (3) schalenförmig konfiguriert und einen Boden (11) mit randseitigen Schenkeln (12, 13) aufweist.

## Claims

1. Ball joint, in particular for components of the suspension of motor vehicles, such as a wishbone or trailing arm, comprising a base body (3) and a ball socket (25) formed on the base body (3) as well as a ball stud (21) with a joint ball (22), wherein the joint ball (22) of the ball stud (21) is received in the ball socket (25) and held there by a locking ring (26), wherein the locking ring (26) has a flange section (29) adjacent to the base body (3) and connected with the base body (3) by a continuous weld (37) running around the flange section (29), **characterised in that** the flange section (29) has a circumferential groove (39) on its outer periphery (38) and a groove flank (40) that is formed as a welding surface (42).

2. Ball joint according to claim 1, **characterised in that** the welding surface (42) delimits a nose or wedge-shaped welding area (43).

3. Ball joint according to claim 1 or 2, **characterised in that** the groove (39) is configured so that a welding beam (S) contacts the welding face (42).

4. Ball joint according to any one of the claims 1 to 3, **characterised in that** the groove (39) has a lower groove flank (40) and an upper groove flank (41), wherein the said upper groove flank (41) is at an angle (α) relative to the vertical (V), which is greater than or equal to (≥) 10°, in particular greater than or equal to (≥) 20°.

5. Ball joint according to any one of the claims 1 to 4, **characterised in that** the flange section (29) above the groove (39) has a surrounding clamping surface (46).

6. Ball joint according to any one of the claims 1 to 5, **characterised in that** the base body (3) is formed from a sheet metal blank and the ball socket (25) is integrally formed from the sheet metal blank, wherein a locking ring holder (27) is formed on the opening side of the ball socket (25) and the locking ring (26) has a connection section (28) as well as the flange section (29), wherein the said flange section (29) has an outer diameter (D3), which is greater than the outer diameter (D1) of the connection section (28).

7. Ball joint according to any one of the claims 1 to 6, **characterised in that** the joint ball (22) of the ball stud (21) is received by insertion of a bearing shell (24) in the ball socket (25).

8. Ball joint according to any one of the claims 1 to 7, **characterised in that** a sealing bellows (44) is provided, which is fixed on the outside at the flange section (29) by means of a first clamping element (45), and at the pivot body (23) of the ball stud (21) by means of a second clamping element (48).

9. Motor vehicle steering, in particular a wishbone or trailing arm with a ball joint (2) according to one of the claims 1 to 8.

10. Motor vehicle steering according to claim 9, **characterised in that** the base body (3) has a shell-like configuration and a bottom (11) with legs (12,13) at the side.

## Revendications

1. Articulation sphérique, en particulier pour composants de suspension de roues de véhicules automobiles, tels que bras oscillants transversaux ou longitudinaux, présentant un corps de base (3) et un coussinet sphérique (25) formé dans le corps de base (3) ainsi qu'un pivot sphérique (21) avec une bille d'articulation (22), dans laquelle la bille d'articulation (22) du pivot sphérique (21) est reçue dans le coussinet sphérique (25) et y est maintenue par un anneau de blocage (26), dans laquelle l'anneau de blocage (26) présente une section de bride (29) s'appuyant sur le corps de base (3) et est relié au corps de base (3) par un cordon de soudure (37) s'étendant autour de la section de bride (29), **caractérisée en ce que** la section de bride (29) présente sur sa périphérie externe (38) une rainure périphérique (39) et un flanc de rainure (40) est formé comme surface de soudure (42).

2. Articulation sphérique selon la revendication 1, **caractérisée en ce que** la surface de soudure (42) délimite une zone de soudure en forme de clavette ou de cale (43).

3. Articulation sphérique selon la revendication 1 ou la revendication 2, **caractérisée en ce que** la rainure (39) est configurée de sorte qu'un rayon de soudure (S) tombe sur la surface de soudure (42).

4. Articulation sphérique selon l'une quelconque des revendications 1 à 3, **caractérisée en ce que** la rainure (39) présente un flanc de rainure inférieur (40) et un flanc de rainure supérieur (41), dans laquelle le flanc de rainure supérieur (41) inscrit par rapport à la verticale (V) un angle (α) qui est supérieur ou égal (≥) à 10°, en particulier supérieur ou égal (≥) à 20°.

5. Articulation sphérique selon l'une quelconque des revendications 1 à 4, **caractérisée en ce que** la section de bride (29) présente une surface de blocage périphérique (46) au-dessus de la rainure (39).

6. Articulation sphérique selon l'une quelconque des revendications 1 à 5, **caractérisée en ce que** le corps de base (3) est formé d'une platine pour tôles et le coussinet sphérique (25) est formé d'une pièce avec la platine pour tôles, dans laquelle un logement d'anneau de blocage (27) est formé côté ouverture du coussinet sphérique (25) et l'anneau de blocage (26) présente une section d'appui (28) ainsi que la section de bride (29), dans laquelle la section de bride (29) possède un diamètre externe (D3) qui est plus grand que le diamètre externe (D1) de la section d'appui (28).

7. Articulation sphérique selon l'une quelconque des revendications 1 à 6, **caractérisée en ce que** la bille d'articulation (22) du pivot sphérique (21) est reçue dans le coussinet sphérique (25) par incorporation d'une coquille de coussinet (24).

8. Articulation sphérique selon l'une quelconque des revendications 1 à 7, **caractérisée en ce qu'**il est prévu un soufflet d'étanchéité (44) qui est fixé au moyen d'un premier élément de fixation (45) côté extérieur sur la section de bride (29) et au moyen d'un second élément de fixation (48) sur le corps (23) du pivot sphérique (21).

9. Bras oscillant pour véhicule automobile, en particulier bras oscillant transversal ou longitudinal, avec une articulation sphérique (2) selon l'une quelconque des revendications 1 à 8.

10. Bras oscillant pour véhicule automobile selon la revendication 9, **caractérisé en ce que** le corps de base (3) est configuré en forme de cuvette et présente un fond (11) avec des branches latérales (12, 13).
